# EUROPÄISCHE PATENTSCHRIFT

(11) **EP 1 824 695 B1**
(45) Veröffentlichungstag und Bekanntmachung des Hinweises auf die Patenterteilung: **05.08.2009**
(21) Anmeldenummer: 05809369.1
(22) Anmeldetag: 19.11.2005
(51) Int. Cl.: B60H 1/32

(54) **KLIMAANLAGE FÜR KRAFTFAHRZEUGE**
AIR CONDITIONER FOR MOTOR VEHICLES
CLIMATISATION DESTINEE A DES VEHICULES

(30) Priorität: 14.12.2004 DE 102004060000
(43) Veröffentlichungstag der Anmeldung: 29.08.2007
(73) Patentinhaber: Bayerische Motoren Werke Aktiengesellschaft, 80809 München (DE)
(72) Erfinder: ENGEL, Jochen, 80807 München (DE)
(86) Internationale Anmeldenummer: PCT/EP2005/012413
(87) Internationale Veröffentlichungsnummer: WO 2006/063658

(56) Entgegenhaltungen:
- DE-A1- 10 316 856
- DE-A1- 19 914 443
- US-A- 4 510 764

## Beschreibung

Die Erfindung bezieht sich auf eine Klimaanlage für Kraftfahrzeuge nach dem Oberbegriff des Patentanspruchs 1.

Aus der DE 199 14 443 A1 ist bereits eine Klimaanlage bekannt, die in Abhängigkeit vom Betriebszustand der Brennkraftmaschine derart unterschiedlich angesteuert wird, dass der Kompressorantrieb im Schubbetrieb der Brennkraftmaschine eingeschaltet, in anderen Betriebszuständen, wie beispielsweise im Beschleunigungsbetrieb abschaltbar ist. Dadurch wird einerseits der Energieaufwand für die Klimaanlage und damit auch der Kraftstoffverbrauch des Kraftfahrzeugs erheblich reduziert, und andererseits soll-die Leistung-der Brennkraftmaschine weitestgehend zur Erzielung höchstmöglicher Fahrleistungen des Kraftfahrzeugs zur Verfügung stehen. Nachteilig ist bei einer derartigen Klimaanlage ist, dass im Kompressorbetrieb lediglich auf genau eine vorgegebene Verdampfer-Solltemperatur, in der Regel sind das 1,6° Celsius, geregelt werden kann. Ist der Kompressor ausgeschaltet, steigt die Temperatur an.

Aus der gattungsbildenden DE 103 16 856 A1 ist eine Klimaanlage mit einem extern geregelter Kompressor mit einer verstellbaren Taumelscheibe zum variablen Einstellen der Verdampfertemperatur und mit einer den Betrieb der Klimaanlage in Abhängigkeit vom Betriebszustand der Brennkraftmaschine beeinflussenden Steuerung bekannt. Die Steuerung ist dabei derart ausgestaltet, dass im Schubbetrieb der Brennkraftmaschine die Taumelscheibe derart verstellt wird, dass sich die Verdampfertemperatur unter die vorgegebene Verdampfer-Solltemperatur absenkt. Nach dem Schubbetrieb der Brennkraftmaschine wird die Taumelscheibe zumindest für eine bestimmte Zeit derart verstellt, dass sich die unter die Verdampfer-Solltemperatur abgesenkte Verdampfertemperatur erhöht.

Zum weiteren Stand der Technik wird noch auf die US 4 510 764 verwiesen.

Aufgabe der Erfindung ist es, eine zum genannten Stand der Technik verbesserte Klimaanlage anzugeben, die eine weitere Verbrauchsreduzierung und ein positivere Beeinflussung der Fahrdynamik ermöglicht.

Diese Aufgabe wird erfindungsgemäß durch eine Klimaanlage nach Patentanspruch 1 gelöst. Vorteilhafte Weiterbildungen sind die Gegenstände der abhängigen Ansprüche.

Die erfindungsgemäße Klimaanlage für Kraftfahrzeuge, die durch eine mit Schubabschaltung ausgerüstete Brennkraftmaschine angetrieben werden, mit einem von der Brennkraftmaschine angetriebenen Kompressor zum Einstellen einer vorgegebenen Verdampfer-Solltemperatur, und mit einer den Betrieb der Klimaanlage in Abhängigkeit vom Betriebszustand der Brennkraftmaschine beeinflussenden Steuerung oder Regelung, zeichnet sich dadurch aus, dass der Kompressor ein extern geregelter Kompressor mit einer verstellbaren Taumelscheibe zum Einstellen der Verdampfertemperatur ist und die Steuerung oder Regelung derart ausgestaltet ist, dass im Schubbetrieb der Brennkraftmaschine die Taumelscheibe derart verstellt wird, dass sich die Verdampfertemperatur unter die vorgegebene Verdampfer-Solltemperatur absenkt.

Unter einer Klimaanlage mit einem extern geregelten Kompressor ist eine Klimaanlage gemeint, bei-der die Verdampfertemperatur durch Verstellen der Taumelscheibe variabel von außen eingestellt werden kann. Durch Ansteuern der Taumelscheibe zwischen einem minimalen und maximalen Neigungswinkel, ist es möglich, die Verdampfertemperatur auf ein beliebiges Temperaturniveau anzuheben beziehungsweise anzusenken. Bei einem Vergrößern des Neigungswinkels der Taumelscheibe wird der Saugdruck des angesaugten Kältemittels abgesenkt und dadurch die Verdampfertemperatur abgesenkt. Entsprechend wird bei einer Reduzierung des Neigungswinkels der Taumelscheibe der Saugdruck, und damit verbunden die Verdampfertemperatur, wieder erhöht. Je größer der Neigungswinkel der Taumelscheibe ist, bzw. je weiter die Taumelscheibe geöffnet ist, desto mehr Kältemittel strömt in den Kompressor, und desto kühler wird der Verdampfer. Im Unterschied zu intern geregelten Kompressoren kann der Verdampfer nicht nur auf eine bestimmte Verdampfertemperatur, die Verdampfer-Solltemperatur, sonder auf eine beliebige Verdampfertemperatur geregelt werden.

Die erfindungsgemäße Klimaanlage bietet den Vorteil, dass im Schubbetrieb, bei dem die Brennkraftmaschine keinen Treibstoff verbraucht, durch eine Vergrößerung des Neigungswinkels der Taumelscheibe der Saugdruck gesenkt und dadurch die Verdampfertemperatur für die Dauer des Schubbetriebs ohne Treibstoffverbrauch unter die Verdampfer-Solltemperatur bis zum Einsatz des Vereisungsschutzes abgesenkt wird. Somit kann zusätzliche Kälte im Verdampfer gespeichert werden, die wiederum später freigesetzt werden kann. Gleichzeitig wird durch Vergrößerung des Neigungswinkels der Taumelscheibe zusätzlich die Motorbremswirkung erhöht.

Vorteilhafterweise wird zum Absenken der Verdampfertemperatur die Taumelscheibe derart angestellt, so dass sich ein maximaler Taumelscheibenwinkel einstellt. Dadurch ist ein maximales Absenken der Verdampfertemperatur ohne zusätzlichen Treibstoffverbrauch möglich. Die Motorbremswirkung wird ebenfalls maximal. Der maximale Taumelscheibenwinkel kann in Abhängigkeit von der Fahrzeuggeschwindigkeit und/oder anderer Betriebsparameter unterschiedlich groß sein.

Die Steuerung der Klimaanlage wird derart ausgestaltet sein, dass nach dem Schubbetrieb der Brennkraftmaschine die Taumelscheibe zumindest für eine bestimmte Zeit derart verstellt wird, dass sich die unter die Verdampfer-Solltemperatur abgesenkte Verdampfertemperatur wieder erhöht. Nach dem Schubbetrieb schließt in der Regel ein Beschleunigungsbetrieb an. Es kann sich aber auch um einen Konstantbetrieb handeln. Durch eine derartige Ansteuerung steht bspw. während der Beschleunigungsphase die gesamte oder ein Großteil der Leistung der Brennkraftmaschine dem Antrieb zur Verfügung, was sich wiederum positiv auf die Fahrdynamik des Fahrzeugs auswirkt. Die Erhöhung der Verdampfertemperatur erfolgt unter Berücksichtigung von Messwerten, die einen komfortablen Verdampfertemperatur-Anstieg zulassen. Bei den Messwerten handelt es sich bspw. um die Außentemperatur und/oder die eingestellte Gebläsestufe. Das Zeitfenster, in dem eine derartige Steuerung vorgenommen wird, ist in jedem Fall so zu wählen, dass sich nach Beendigung dieser Steuerung nicht eine Verdampfertemperatur einstellt, die größer als die Verdampfer-Solltemperatur ist. Schwankungen der Verdampfertemperatur werden gegebenenfalls durch die Wärmetauschertemperatur und/oder die Temperaturmischlappen kompensiert.

Zum Erhöhen der Verdampfertemperatur wird die Taumelscheibe für ein vorgegebenes erstes Zeitintervall minimal geöffnet, wodurch während dieses ersten Zeitintervalls die gesamte Leistung der Brennkraftmaschine für den Antrieb zur Verfügung steht. Dieses erste Zeitintervall ist so zuwählen, dass auch-bei einer anschließenden minimalen Öffnung der Taumelscheibe die Verdampfertemperatur nicht die Verdampfer-Solltemperatur übersteigt. Vorteilhafterweise wird das Ende des ersten Zeitintervalls in Abhängigkeit von der aktuell ermittelten Verdampfertemperatur und/oder dem Gradienten der Verdampfertemperatur und/oder der vorgegebenen Verdampfer-Solltemperatur vorgegeben. Je größer der Gradient der Verdampfertemperatur ist, desto früher muss vor Erreichen der Verdampfer-Solltemperatur die Stellung der Taumelscheibe aus der minimalen Öffnung verändert werden. Vorteilhafterweise wird dann zum Erreichen der Verdampfertemperatur die Taumelscheibe nach dem vorgegebenen ersten Zeitintervall derart verstellt, dass sich wieder die vorgegebene Verdampfer-Solltemperatur einstellt.

Vorteilhafterweise handelt es sich bei dem Verdampfer, dessen Verdampfer-Solltemperatur eingestellt wird, um einen kältespeichernden Verdampfer, wodurch die Effizienz bzw. die Wirkung der erfindungsgemäßen Klimaanlage gesteigert werden kann. Alternativ dazu kann die überschüssige Kälteleistung in einem separaten kältespeichernden Medium bzw. in einem externen Kältespeicher gespeichert werden.

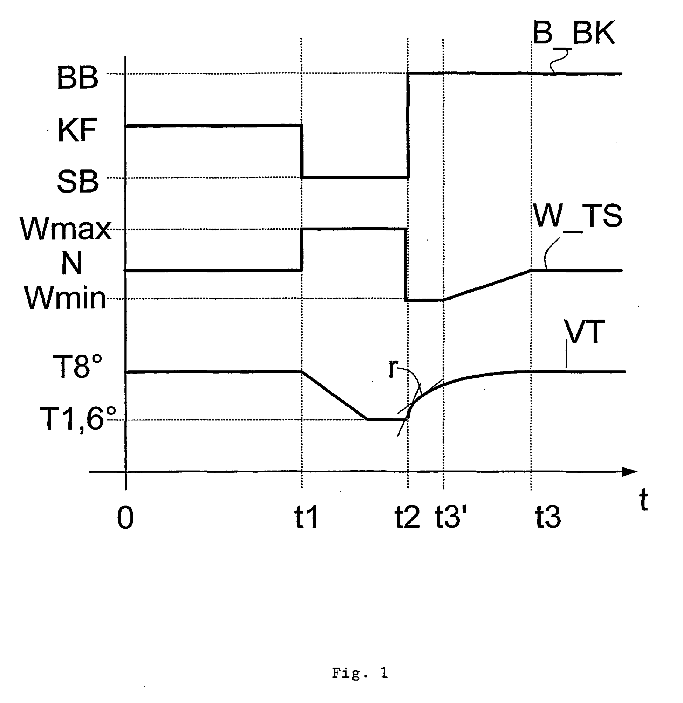

Im Folgenden wird die Erfindung anhand einer Zeichnung näher erläutert. Dabei zeigt die einzige Figur den Zusammenhang zwischen den Betriebsarten einer Brennkraftmaschine und der Ansteuerung der Klimaanlage.

In der Figur sind über die Zeit t die drei Signale B-BK, W_TS und VT dargestellt, wobei das Signal B_BK den Betriebsmodus einer Brennkraftmaschine eines Fahrzeugs, das Signal W-TS die Winkelstellung der Taumelscheibe des extern geregelten Kompressors der im Fahrzeug vorhandenen Klimaanlage und das Signal VT die Verdampfertemperatur der Klimaanlage wiedergibt.

Im Zeitfenster zwischen den Zeitpunkten 0 und t1 befindet sich das Fahrzeug beziehungsweise die Brennkraftmaschine in einem Konstantmodus KF mit konstanter Fahrzeuggeschwindigkeit und konstanter Drehzahl. Solange die Brennkraftmaschine im Konstantmodus KF betrieben wird, wird die Taumelscheibe mit einem definierten Neigungswinkel N von zum Beispiel 15° angesteuert. Dadurch stellt sich eine Verdampfertemperatur VT gemäß einer Verdampfer-Solltemperatur T8° von 8° Celsius ein. Die Verdampfer-Solltemperatur kann hier, im Unterschied zu herkömmlichen Klimaanlagen auf 8° Celsius, und nicht auf 1,6° Celsius vorgegeben werden. Somit wird zum Erreichen einer zum Stand der Technik erhöhten Verdampfer-Solltemperatur T8° prinzipiell weniger Energie für das Abkühlen des Verdampfers benötigt.

Ab dem Zeitpunkt t1 schaltet die Brennkraftmaschine in den Schubbetrieb SB und verbraucht keinen Treibstoff mehr. Um nun zusätzliche Kälte für den anschließenden Beschleunigungsbetrieb zu speichern und um eine erhöhte Motorbremswirkung zu erzielen, wird die Taumelscheibe des extern geregelten Kompressors in dieser Ausgestaltung mit einem maximalen Neigungswinkel Wmax angestellt, wobei der maximale Neigungswinkel Wmax von der Fahrzeuggeschwindigkeit abhängig sein kann. Dadurch wird der Saugdruck des Kompressors maximal gesenkt, wodurch die Verdampfertemperatur VT von ihrem Ausgangsniveau T8° abgesenkt wird. Die Verdampfertemperatur VT wird jedoch nur bis zu einer minimalen Temperatur T1,6°, in dieser Ausgestaltung bis zu einer minimalen Temperatur T1,6° von 1,6° Celsius abgesenkt. Je nach Dauer des Schubbetriebs SB der Brennkraftmaschine ist eine Abkühlung der Verdampfertemperatur VT von 8° Celsius auf 1,6° Celsius ohne Treibstoffeinsatz bzw. ohne CO₂- Ausstoß möglich. Ein weiteres Absenken der Verdampfertemperatur VT ist aus Gründen der Vereisungsgefahr des Verdampfers nicht sinnvoll.

Zum Zeitpunkt t2 wechselt die Brennkraftmaschine vom Schubbetrieb SB in den Beschleunigungsbetrieb BB. Sie könnte aber auch einen anderen Modus, bspw. den Konstantmodus wechseln. Die Taumelscheibe wird daraufhin innerhalb kürzester Zeit für ein vorgegebenes erstes Zeitintervall von t2 bis t3' mit einem minimalen Neigungswinkel Wmin angesteuert. Die Verdampfertemperatur VT steigt dadurch zwar wieder an, jedoch steht somit die gesamte Leistung der Brennkraftmaschine für den Antrieb zur Verfügung.

Das Ende des ersten Intervalls wird in Abhängigkeit von der aktuellen Verdampfertemperatur VT und dem Gradienten r der Verdampfertemperatur VT und der Verdampfer-Solltemperatur vorgegeben. Vor Erreichen der Verdampfer-Solltemperatur T8° wird nach dem ersten Zeitintervall, also zum Zeitpunkt t3', der Taumelscheibenwinkel W_T wieder erhöht, so dass sich zum Zeitpunkt t3 die Verdampfer-Solltemperatur T8° einstellt. Der Taumelscheibenwinkel wird derart eingestellt, dass die Verdampfertemperatur unter Berücksichtigung verschiedener Randbedingungen, wie bspw. der Außentemperatur und der Luftmenge, komfortabel ansteigt. Somit steht während des Beschleunigungsbetriebs der Brennkraftmaschine auch während des zweiten Zeitintervalls von t3' bis t3 nahezu die volle Leistung der Brennkraftmaschine dem Antrieb zur Verfügung, da zu diesem Zeitpunkt immer noch kein Kühlen des Verdampfers, sondern lediglich ein langsameres Ansteigen der Verdampfertemperatur eingestellt wird.

## Patentansprüche

1. Klimaanlage für Kraftfahrzeuge, die durch eine mit Schubabschaltung ausgerüstete Brennkraftmaschine angetrieben werden, mit einem von der Brennkraftmaschine angetriebenen Kompressor zum Einstellen einer vorgegebenen Verdampfer-Solltemperatur, und mit einer den Betrieb der Klimaanlage in Abhängigkeit vom Betriebszustand der Brennkraftmaschine beeinflussenden Steuerung oder Regelung, wobei der Kompressor ein extern geregelter Kompressor mit einer verstellbaren Taumelscheibe zum variablen Einstellen der Verdampfertemperatur (VT) ist und die Steuerung oder Regelung derart ausgestaltet ist, dass im Schubbetrieb (SB) der Brennkraftmaschine die Taumelscheibe derart verstellt wird, dass sich die Verdampfertemperatur (VT) unter die vorgegebene Verdampfer-Solltemperatur (T8°) absenkt, und nach dem Schubbetrieb (SB) der Brennkraftmaschine die Taumelscheibe zumindest für eine bestimmte Zeit (t2 - t3) derart verstellt wird, dass sich die unter die Verdampfer-Solltemperatur (T8°) abgesenkte Verdampfertemperatur (VT) erhöht, **dadurch gekennzeichnet, dass** zum Erhöhen der Verdampfertemperatur (VT) die Taumelscheibe für ein vorgegebenes erstes Zeitintervall (t2 - t3') minimal geöffnet (Wmin) wird.

2. Klimaanlage nach Patentanspruch 1, **dadurch gekennzeichnet, dass** zum Absenken der Verdampfertemperatur (VT) die Taumelscheibe maximal angestellt (Wmax) wird.

3. Klimaanlage nach Patentanspruch 1 oder 2, **dadurch gekennzeichnet, dass** das Ende des ersten Zeitintervalls (t3') in Abhängigkeit von der aktueii ermittelten Verdampfertemperatur (VT) und/oder dem Gradienten (r) der Verdampfertemperatur und/oder der vorgegebenen Verdampfer-Solltemperatur (T8°) vorgegeben wird.

4. Klimaanlage nach einem der vorangegangenen Patentansprüche, **dadurch gekennzeichnet, dass** zum Erhöhen der Verdampfertemperatur (VT) die Taumelscheibe nach dem vorgegebenen ersten Zeitintervall (t2 - t3') derart verstellt wird, dass sich die vorgegebene Verdampfer-Solltemperatur (T8°) einstellt.

5. Klimaanlage nach einem der vorangegangenen Ansprüche, **dadurch gekennzeichnet, dass** der Verdampfer, dessen Verdampfer-Solltemperatur eingestellt wird, ein kältespeichernder Verdampfer ist.

## Claims

1. An air conditioning system for motor vehicles, which are driven by an internal combustion engine equipped with an overrun fuel cut-off, comprising a compressor driven by the internal combustion engine to set a predetermined desired evaporator temperature, and a controlling or regulating unit influencing the operation of the air conditioning system as a function of the operating state of the internal combustion engine, wherein the compressor is an externally regulated compressor with an adjustable swash plate for variably setting the evaporator temperature (VT) and the controlling or regulating unit is configured in such a way that in the coasting operation (SB) of the internal combustion engine, the swash plate is adjusted in such a way that the evaporator temperature (VT) drops below the predetermined desired evaporator temperature (T8°), and, after the coasting operating (SB) of the internal combustion engine, the swash plate is adjusted, at least for a specific time (t2 - t3), in such a way that the evaporator temperature (VT) which has dropped below the desired evaporator temperature (T8°) is increased, **characterised in that** to increase the evaporator temperature (VT), the swash plate is opened to a minimum value (Wmin) for a predetermined first time interval (t2 - t3').

2. An air conditioning system according to claim 1, **characterised in that** to lower the evaporator temperature (VT), the swash plate is set to a maximum value (Wmax).

3. An air conditioning system according to claim 1 or 2, **characterised in that** the end of the first time interval (t3') is predetermined as a function of the currently determined evaporator temperature (VT) and/or the gradient (r) of the evaporator temperature and/or the predetermined desired evaporator temperature (T8°).

4. An air conditioning system according to any one of the preceding claims, **characterised in that** to increase the evaporator temperature (VT), the swash plate is adjusted after the predetermined first time interval (t2 - t3') in such a way that the predetermined desired evaporator temperature (T8°) is set.

5. An air conditioning system according to any one of the preceding claims, **characterised in that** the evaporator, the desired evaporator temperature of which is set, is a cold-storing evaporator.

## Revendications

1. Installation de climatisation de véhicule automobile, entraînée par un moteur à combustion interne équipé d'un arrêt de poussée, et ayant un compresseur entraîné par le moteur à combustion interne pour régler une température de consigne prédéfinie de l'évaporateur et une commande ou régulation influençant le fonctionnement de l'installation de climatisation selon l'état de fonctionnement du moteur à combustion interne,
le compresseur est un compresseur à régulation externe équipé d'un disque de nutation réglable pour régler de manière variable la température (VT) de l'évaporateur et
la commande ou régulation est réalisée pour qu'en mode de poussée (SB) du moteur à combustion interne, le disque de nutation soit réglé pour que la température d'évaporation (VT) descende en dessous de la température de consigne prédéfinie de l'évaporateur (T8°), et qu'après le mode de poussée (SB) du moteur à combustion interne, le disque de nutation soit réglé au moins pour un certain temps (t2-t3) pour augmenter la température d'évaporateur (VT) descendue en dessous de la température de consigne (T8°) de l'évaporateur,
**caractérisée en ce qu'**
on ouvre à une valeur minimale (Wmin) le disque de nutation pendant un premier intervalle de temps prédéfini (t2-t3'), pour augmenter la température de l'évaporateur (VT).

2. Installation de climatisation selon la revendication 1,
**caractérisée en ce que**
pour abaisser la température d'évaporation (VT) on incline le disque de nutation au maximum (Wmax).

3. Installation de climatisation selon la revendication 1 ou 2,
**caractérisée en ce que**
la fin du premier intervalle de temps (t3') est prédéfinie en fonction de la température de vaporisation (VT) déterminée actuellement et/ou du gradient (r) de la température d'évaporation et/ou de la température de consigne (T8°) prédéfinie de l'évaporateur.

4. Installation de climatisation selon l'une des revendications précédentes,
**caractérisée en ce que**
pour augmenter la température (VT) de l'évaporateur, on règle le disque de nutation après un premier intervalle de temps prédéfini (t2-t3') pour obtenir la température de consigne d'évaporation prédéterminée (T8°).

5. Installation de climatisation selon l'une des revendications précédentes,
**caractérisée en ce que**
l'évaporateur dont la température de consigne d'évaporation est réglée est un évaporateur accumulateur de froid.
